# EUROPEAN PATENT APPLICATION

(11) **EP 4 119 333 A1**
(43) Date of publication of application: **18.01.2023**
(21) Application number: 21192689.4
(22) Date of filing: 24.08.2021
(51) Int. Cl.: B29C 64/282

(54) **LIGHT-CURING 3D PRINTER OPTICAL MACHINE, PRINTER AND METHOD OF LUMINOUS DISPLAY**

(30) Priority: 14.07.2021 CN 202110793753
(71) Applicant: Shenzhen Pengji Photoelectricity Co.,Ltd, 518000 Shenzhen Guangdong (CN)
(72) Inventor: LIU, JIANWEN, Shenzhen (CN); LIU, PENGJI, Shenzhen (CN); LIU, Cathy Yizhi, Shenzhen (CN)
(74) Representative: Cleanthous, Marinos

(57) **Abstract**

The disclosure relates to a light-curing 3D printer. The light-curing 3D printer includes a plurality of light-emitting sources (30) which are uniformly arranged and simultaneously emit scattered lights; a grid plate (40) which is located above the light-emitting sources (30), and has a vertical optical channel (41) corresponding to a position right above one of the light-emitting sources (30) which are located in the center of the optical channel (41) which is surrounded by vertical and opaque side walls (42) limiting the reflection of light; a lens (50) which is located above the vertical optical channel (41), and has a condensing lens unit (51) formed corresponding to a position right above one of the optical channels; a liquid crystal display (LCD) (60) transmitting screen which is located above the lens (50) and has pixel lattices. According to the disclosure, the control requirement of the light-emitting source is simplified, the uniformity of light is improved, and the curing effect of the product is improved. The 3D curing printer can be applied to photoelectric industry, printed circuit board (PCB) industry, packaging printing industry, label printing industry, flower paper industry, printing industry, household glass industry and electronic glass industry, etc.

## Description

### TECHNICAL FIELD

The disclosure relates to the technical field of 3D printing, particularly to a light-curing 3D printer optical machine, a printer and a method of luminous display.

### BACKGROUND

A 3D printing technology is that a 3D object is obtained by layer-by-layer printing through a 3D model. The existing 3D printing technology includes a laser optical modulator (LOM) technology and a light-curing technology, wherein the light-curing technology is widely applied. The light-curing technology is that a resin is polymerized and cured under the irradiation of light, and a part that is not irradiated is not cured. Some of the existing light-curing 3D printers use a lighting-emitting diode (LED) display screen to create an exposure pattern. The LED display screen is a display screen consisting of light-emitting diodes, and therefore a corresponding exposure pattern is obtained only by driving the luminous situation of the light-emitting diode of the LED display screen. This exposure way needs to well control parameters such as brightness and exposure compensation of an LED lamp, or else the quality of a finished product will be affected. Some of the existing light-curing 3D printers use the LCD liquid crystal display screen, but the uniformity of light is relatively poor, so as to cause the poor product curing effect.

### SUMMARY

In view of this, it is necessary to provide a light-curing 3D printer optical machine, a printer and a method of luminous display, thereby simplifying the control requirement of a light-emitting source, improving the uniformity of light and improving the curing effect of the product.

The disclosure provides a light-curing 3D printer optical machine, the light-curing 3D printer optical machine comprising:

a plurality of light-emitting sources which are uniformly arranged and simultaneously emit scattered lights;

a grid plate which is located above the light-emitting source, and has a vertical optical channel corresponding to a position right above one of the light-emitting sources which are located in the center of the optical channel which is surrounded by vertical and opaque side walls limiting the reflection of light;

a lens which is located under a light-guiding member, and has a condensing lens unit formed corresponding to a position right above one of the optical channels;

a liquid crystal display (LCD) transmitting screen which is located above the lens, and has pixel lattices, and the transparency of each of pixel points being controlled by regulating a voltage;

wherein, at least a part of the scattered lights emitted from the light-emitting sources enters into the optical channel, a part of the scattered lights entering into the optical channel emerges out and merges into the condensing lens unit, the part of the scattered light after being collimated by the condensing lens unit is directed to the LCD transmitting screen, and the lights from the plurality of light-emitting sources are respectively collimated and completely cover the LCD transmitting screen.

Further, the lower surface of the lens is a plane, the upper surface of the lends is a plurality of convex faces, each of the convex faces corresponds to one of the condensing lens unit, and the lends is supported by the grid plate and tightly clings to the upper surface of the grid plate.

Further, the grid plate is spaced from the light-emitting sources at a certain distance.

Further, the light-emitting sources are arranged on a lamp plate, and a radiator plate is arranged under the lamp plate.

Further, the grid plate and the radiator plate are fixed, the LCD transmitting screen is fixed through a frame, and the frame and the heating plate are fixed through a bracket.

Further, the LCD transmitting screen is a constant black hard screen.

Further, the LCD transmitting screen comprises scanning lines and signal lines, the scanning lines transversely extend and are longitudinally spaced, the signal lines longitudinally extend and are transversely spaced, square regions are defined between two adjacent scanning lines and two adjacent signal lines, a transparent electrode is arranged in the square region, the outline of the transparent electrode is square and continuous, a region corresponding to the transparent electrode is a minimum pixel point, and the transparent electrode is electrically connected with one of the two scanning lines and one of the two signal lines.

Further, the LCD transmitting screen is a black and white screen.

The disclosure provides a light-curing 3D printer, wherein the light-curing 3D printer uses the optical machine.

The disclosure also provides a method for 3D printing based on the light-curing 3D printer, the method comprising the following steps:

controlling the plurality of light-emitting sources to simultaneously emit scattered lights to be respectively collimated by corresponding condensing lens units;

regulating a voltage according to a shape of a to-be-product to control the transparency of each pixel of the LCD transmitting screen so as to obtain a transmitting pattern corresponding to the shape of the to-be-product;

wherein, the collimated light emerges out from the transmitting pattern.

Compared with the prior art, the disclosure has the beneficial effects: based on the LCD transmitting screen, the transmitting situation of the pixel lattices of the LCD transmitting screen can be well controlled so as to obtain the transmitting pattern corresponding to the shape of the to-be-product, and at least a part of the scattered lights emitted by the light-emitting source enters into the optical channel, the light scattered at a large angle is absorbed by the grid plate and cannot enter into the optical channel, this part of the light will be discarded, a part of the scattered lights entering into the optical channel at a slightly larger angle will be absorbed by the side wall of the optical channel, and the light only within the predetermined angle range will be emitted from the optical channel into the condensing lens unit, The condensing lens unit collimates this part of the light to the LCD transmitting screen. The light emitting to the LCD transmitting screen is relatively vertical and uniform. The collimated light can be emitted from the transmitting pattern and irradiated on a liquid photosensitive resin, and then cured to obtain a layer pattern. The 3D object is obtained by continuous superimposing the layer patterns. The uniformity of the collimated light is high, so that the light curing effect is improved, and the final 3D object is more realistic. In the process of curing, the light-emitting source can emit light all the time without complicated control only as long as the light transmission of LCD transmitting screen is controlled. The 3D curing printer can be applied to photoelectric industry, printed circuit board (PCB) industry, packaging printing industry, label printing industry, flower paper industry, printing industry, household glass industry and electronic glass industry, etc., and corresponding processes can be developed for various industries and customers' requirements.

### BRIEF DESCRIPTION OF THE DRAWINGS

Fig.1 is a structural diagram of an embodiment of the disclosure.
Fig.2 is a structural diagram of a grid plate of an embodiment of the disclosure.

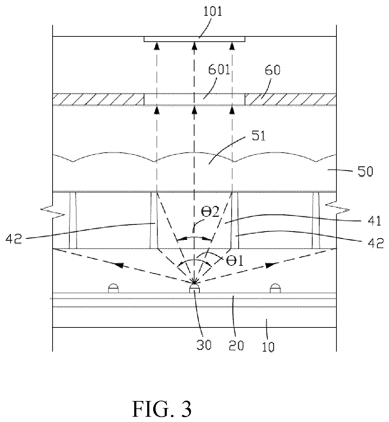

Fig.3 is a path graph of the disclosure.
Fig.4 is a structural diagram of an LCD liquid crystal colour display screen used in the prior art.

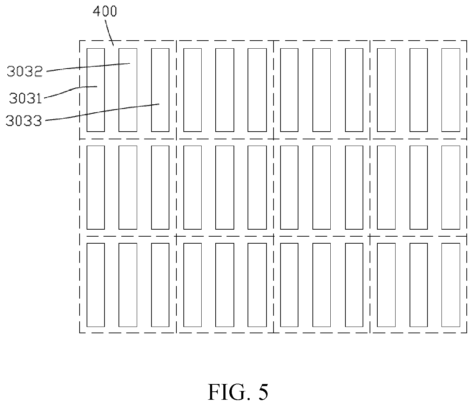

Fig.5 is an effect picture of an LCD liquid crystal colour display screen used in the prior art.
Fig.6 is a structural diagram of an embodiment of an LCD transmitting screen of the disclosure.

### DESCRIPTION OF THE EMBODIMENTS

Next, the technical solution in embodiments of the disclosure will be clearly and completely described by combining with the drawings in embodiments of the disclosure, obviously, the described examples are only one part of embodiments of the disclosure but not all the embodiments. Based on the examples of the disclosure, other examples made by persons of ordinary skill in the art without creative efforts are all included within the protective scope of the disclosure. It can be understood that the drawings are only used for proving reference and illustration but are not intended to limit the disclosure. Connection relationships displayed in the drawings are only for clear description, but not limiting the connection manners.

It should be noted that when a component is considered to "connect" another component, it can be directly connected to another component, or there may be intermediate components at the same time. Unless otherwise defined, all technical and scientific terms used herein have the same meanings as those generally understood by those skilled in the technical field of the disclosure. It should also be noted that unless otherwise specified and limited, the terms "installation", "link" and "connection" should be understood in a broad sense. For example, they can be fixed connection, detachable connection or integrated connection; it can be mechanical connection, electrical connection or internal communication between two elements. For persons of ordinary skill in the art, the specific meaning of the above terms in the disclosure can be understood in specific circumstances. The terms used in the description of the disclosure herein are only for the purpose of describing specific embodiments and are not intended to limit the disclosure.

It should also be noted that in the description of the disclosure, it should be noted that an orientation or position relationship indicated by the terms "center", "upper", "lower", "left, "right", "vertical", "horizontal", "inside" and "outside" is based on an orientation or position relationship shown in the attached drawings, only for the convenience of describing the disclosure and simplifying the description, rather than indicating or implying that the device or element must have a specific orientation and be constructed and operated in a specific orientation, and therefore it cannot be understood as a limitation of the disclosure. In addition, the terms "first", "second" and "third" are used only for descriptive purposes and cannot be understood as indicating or implying relative importance.

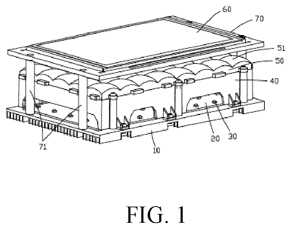

Referring to Fig. 1, the disclosure provides a light-curing 3D printer, the light-curing 3D printer comprising a radiator plate 10, a lamp plate 20, a plurality of light-emitting sources 30, a grid plate 40, a lens 50 and an LCD transmitting screen 60 from bottom to top.

Wherein, the plurality of light-emitting sources 30 are uniformly arranged on the lamp plate 20, the light-emitting sources 30 can be arranged in a matrix column, and have equal row spacing and column spacing. The light emitted by each of the light-emitting sources 30 is a scattered light in a wide range. After the light-emitting sources 30 are arranged on the lamp plate 20, the luminous angle is approximately 180°. In the disclosure, the plurality of light-emitting sources 30 emit scattered lights at the same time. The light-emitting sources 30 emit lights having a specific wavelength and used for curing the resin.

The radiator plate 10 is used for improving the heat dissipation effect of the light-emitting sources 30. Wherein, the grid plate 40 is spaced from the light-emitting sources 30 at a certain distance, and the grid plate 40 and the radiator plate 10 are fixed. The lower surface of the lens 50 is the plane, the upper surface of the lens 50 is a plurality of convex faces, each of the convex faces corresponds to a condensing lens unit 51, and the lens 50 is supported by the grid plate 40 and tightly clings to the upper surface of the grid plate 40. The LCD transmitting screen 60 is fixed through the frame 70, and the frame 70 and the radiator plate 10 are fixed through the bracket 71. The LCD transmitting screen 60 has a pixel lattice.

The LCD transmitting screen 60 is a constant black hard screen. The light cannot pass through the constant black LCD transmitting screen 60 when it is not powered on, that is, it is black under the irradiation of the light-emitting source and is opaque. When a machine fails or stops, the resin will not be cured, and there will be no residues and kelp silks in the process of curing. The liquid crystal of the hard LCD transmitting screen 60 does not change under the external force, so as to avoid whitening and light leakage of the LCD transmitting screen 60 and prevent residues.

The principle of the LCD transmitting screen 60 is that the liquid crystal is between two conductive glass substrates. Under the action of two electrodes of upper and lower glass substrates, liquid crystal molecules are distorted and deformed, so as to change the transparency of the LCD pixel lattice. Wherein, the LCD transmitting screen 60 is only used as a light transmitting window and does not emit light by itself.

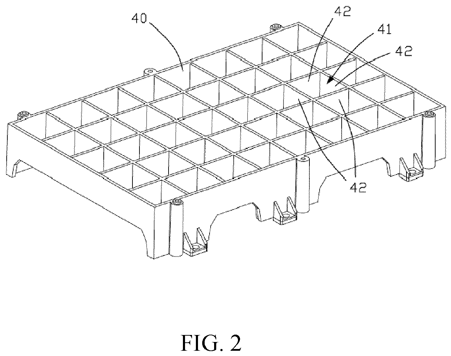

As shown in Fig. 2, the grid plate 40 can be made of an opaque light-absorbing material. The grid plate 40 has a plurality of vertical optical channels 41 uniformly distributed as the light-emitting sources 30. Uniformly distributed optical channels 41 are formed by a plurality of horizontally and longitudinally arranged vertical plates. The optical channel 41 is surrounded by vertical side walls 42. When the light is irradiated on the side walls 42, it will be limited to be reflected or even absorbed. A vertical optical channel 41 corresponds to a position right above the light-emitting source 30, and the light-emitting source 30 is located in the center of the optical channel 41.

A condensing lens unit 51 is formed right above the lens 50 corresponding to the optical channel 41, and the condensing lens unit 51 corresponds to the optical channel 41.

The light emitted by the light-emitting source 30 is approximately 180°. If it is concentrated directly through the condensing lens unit 51, most of the light cannot be collimated to the required angle range, and the concentrated light still has a large angle. In this way, there will be uneven light on the LCD transmitting screen 60. In the disclosure, the scattered light emitted by the light-emitting source 30 within the first predetermined angle range enters into the optical channel 41, while the scattered light being in greater than the predetermined angle range is shielded by the grid plate 40, and the scattered light entering the optical channel 41 is emitted at the second predetermined angle, the light between the first predetermined angle and the second predetermined angle is absorbed by the side wall 42. Referring to Fig. 2, the first predetermined angle is θ1 = 2arctanL1/d1, wherein L1 is a vertical distance between the inner side of the lower end face of the optical channel 41 and its center line, and d1 is a distance between the lower end face of the optical channel 41 and the light-emitting source 30. The second predetermined angle is θ1 = 2arctanL1/d2, wherein L2 is a vertical distance between the inner side of the upper end face of the optical channel 41 and its center line, and d2 is a distance between the upper end face of the optical channel 41 and the light-emitting source 30.

The light source emitted from the optical channel 41 will be incident to the condensing lens unit 51, collimated by the condensing lens unit 51 and then directed to the LCD transmitting screen 60. The light collimation angle is 0-20 degrees, preferably 7 degrees. By adjusting the distance between the LCD transmitting screen 60 and the upper end face of the optical channel 41, the lights of the plurality of light-emitting sources 30 can be collimated and completely cover the LCD liquid crystal transmitting screen 60, so that each pixel point of the LCD liquid crystal transmitting screen 60 can be irradiated by light.

The transmitting situation of the pixel lattice of the LCD transmitting screen 60 can be controlled to obtain the transmitting pattern corresponding to the shape of the to-be-product. The collimated light can be emitted from the transmitting pattern 601 to be irradiated on a liquid photosensitive resin, then can be cured to obtain laminated patterns 101 which are continuously superimposed to obtain the 3D object. The lights directed to the LCD transmitting screen 60 are relatively vertical and uniform. The size of the light transmitting pattern 601 on the LCD transmitting screen 60 is basically consistent with the size of the cured laminated pattern 101, which can improve the light curing effect, and the final 3D object is more realistic. In the process of curing, the light-emitting source 30 can emit light all the time without complicated control only as long as the transmitting situation of the LCD transmitting screen 60 is controlled.

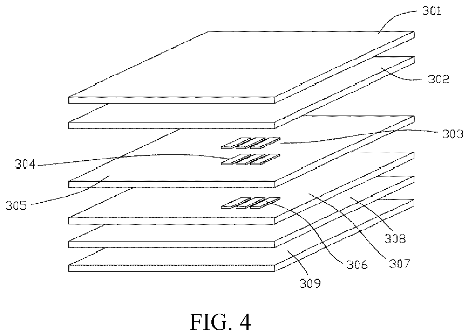

In addition, it should be noted that some of the existing light-curing 3D printers use an LCD color display screen to selectively transmit light. The structure of the existing LCD color display screen is shown in Fig. 4, which includes a front polarizing plate 301, a front glass substrate 302, a RGB layer 303, a front electrode 304, a liquid crystal layer 305, a rear electrode 306, a rear glass substrate 307, a rear polarizing plate 308 and a light-emitting plate 309, wherein the front electrode and the rear electrode are strip-shaped. The R color layer 3031, the G color layer 3032 and the B color layer 3033 completely cover the three electrodes respectively to form the pixel point 400 (dotted box in Fig. 2). In this way, the pixel lattice is continuously formed. The effect can be seen in Fig. 2. Each pixel point includes three strip-shaped subunits, which separately control the voltages of the front and rear corresponding two electrodes to realize the rotation of the liquid crystal at the pixel point. The liquid crystal needs a certain time in the process of rotation, and the three electrodes covered by R, G and B cannot completely and synchronously rotate. Therefore, when the sheet shape is changed and the exposure pattern of the LCD color display screen is changed accordingly, the edge of the product will be rough and not delicate enough. Moreover, the light cannot pass through the gap between two adjacent strip subunits, the transparency of a single pixel point is relatively low, and curing will produce a large number of narrow strips.

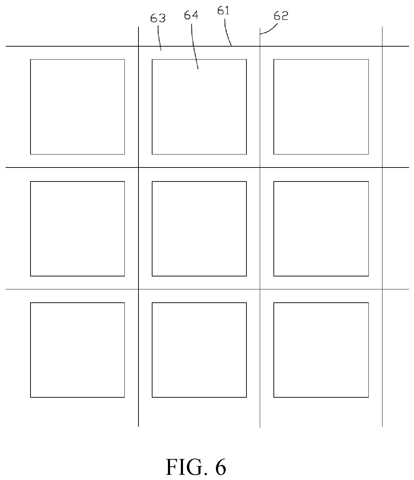

In the specific embodiment of the disclosure, as shown in Fig. 6, the LCD transmitting screen 60 includes scanning lines 61 and signal lines 62, the scanning line 61 transversely extends and are longitudinally arranged at intervals, the signal lines 62 longitudinally extend and are transversely arranged at intervals, and square regions 63 are defined between two adjacent scanning lines 61 and two adjacent signal lines 62, a transparent electrode 64 is arranged in the square area 63, the outline of the transparent electrode 64 is square and the transparent electrode 64 is continuous, the region corresponding to the transparent electrode 64 is the minimum pixel point, and the transparent electrode 64 is electrically connected to one of the two scanning lines 61 and one of the two signal lines 62. Specifically, the transparent electrode 64 is connected with the drain stage of the transistor, the scanning line 61 is connected with the gate of the transistor, and the signal line 62 is connected with the source stage of the transistor, the transparent electrode 64 can be connected with the signal line 62 on the right side and the scanning line 61 on the upper side of the transistor, in this way, such the array arrangement is performed. Of course, the transistor can be arranged at any one position in the upper left corner, lower right corner or lower left corner of the transparent electrode 64.

In the specific embodiment of the disclosure, the minimum pixel point of the square is high transparency rate the transparency rate of 405 nm wavelength is high, and the contrast ratio can reach 500. In the process of changing the exposure pattern, the whole square pixel point liquid crystal rotates at the same time, and the edge of the product is more delicate. The accuracy of the disclosure can reach 30 * 30 microns.

In this embodiment, the LCD transmitting screen 60 is a black and white screen, that is, the RGB layer is removed, so that the transmitting effect of the LCD transmitting screen 60 is better.

The disclosure also provides a method for 3D printing based on the light-curing 3D printer, the method comprising gthe following steps:

S100: controlling a plurality of the light-emitting sources 30 to emit scattered lights at the same time to be collimated by the corresponding condensing lens unit 51.

S200: adjusting the voltage to control the transparency of each pixel of the LCD transmitting screen 60 according to the shape of the to-be-product to obtain a transmitting pattern corresponding to the shape of the to-be-product.

Wherein the collimated light is emitted from the transmitting pattern. It should be understood that the above steps S100 and S200 can be carried out simultaneously or interchangeably.

The technical solution of the disclosure can be applied to photoelectric industry, PCB industry, packaging printing industry, label printing industry, flower paper industry, printing industry, household glass industry and electronic glass industry, etc, and can be used for developing corresponding processes for various industries and customers' requirements.

In the description and claims of the application, the words "include/comprise" and "have/include" and their transformations are used for specifying the existence of the stated features, values, steps or components, but do not exclude the existence or addition of one or more other features, values, steps, components or combinations thereof.

Some features of the disclosure are described in different embodiments for clarity. However, these features can also be described in combination with a single embodiment. On the contrary, some features of the present invention are described only in a single embodiment for simplicity. However, these features can also be described in different embodiments alone or in any suitable combination.

The above description is only a preferred embodiment of the disclosure and is not intended to limit the disclosure. Any modifications, equivalent replacements and improvements made within the spirit and principles of the disclosure shall be included within the protective scope of the disclosure.

## Claims

1. A light-curing 3D printer optical machine, the light-curing 3D printer optical machine comprising:
a plurality of light-emitting sources which are uniformly arranged and simultaneously emit scattered lights;
a grid plate which is located above the light-emitting sources, and has a vertical optical channel corresponding to a position right above one of the light-emitting sources which are located in the center of the optical channel which is surrounded by vertical and opaque side walls limiting the reflection of light;
a lens which is located above a light-guiding member, and has a condensing lens unit formed corresponding to a position right above one of the optical channels; and
a liquid crystal display (LCD) transmitting screen which is located above the lens, and has pixel lattices, and the transparency of each of pixel points being controlled by regulating a voltage;
wherein, at least a part of the scattered lights emitted from the light-emitting sources enters into the optical channel, the part of the scattered lights entering into the optical channel emerges out and merges into the condensing lens unit, the part of the scattered light after being collimated by the condensing lens unit is directed to the LCD transmitting screen, and the lights from the plurality of light-emitting sources are respectively collimated and completely cover the LCD transmitting screen.

2. The light-curing 3D printer optical machine according to claim 1, wherein the lower surface of the lens is a plane, the upper surface of the lens is a plurality of convex faces, each of the convex faces corresponds to one of the condensing lens units, the lens is supported by the grid plate and tightly clings to the upper surface of the grid plate.

3. The light-curing 3D printer optical machine according to claim 1, wherein the grid plate is spaced from the light-emitting sources at a certain distance.

4. The light-curing 3D printer optical machine according to claim 1, wherein the light-emitting sources are arranged on a lamp plate, and a radiator plate is arranged under the lamp plate.

5. The light-curing 3D printer optical machine according to claim 1, wherein the grid plate and the radiator plate are fixed, the LCD transmitting screen is fixed through a frame, and the frame and the heating plate are fixed through a bracket.

6. The light-curing 3D printer optical machine according to claim 1, wherein the LCD transmitting screen is a constant black hard screen.

7. The light-curing 3D printer optical machine according to claim 1, wherein the LCD transmitting screen comprises scanning lines and signal lines, the scanning lines transversely extend and are longitudinally spaced, the signal lines longitudinally extend and are transversely spaced, square regions are defined between two adjacent scanning lines and two adjacent signal lines, a transparent electrode is arranged in the square region, the outline of the transparent electrode is square and continuous, a region corresponding to the transparent electrode is a minimum pixel point, and the transparent electrode is electrically connected with one of the two scanning lines and one of the two signal lines.

8. The light-curing 3D printer optical machine according to claim 7, wherein the LCD transmitting screen is a black and white screen.

9. A light-curing 3D printer, wherein the light-curing 3D printer uses the optical machine of any one of claims 1-8.

10. A method for luminous display based on the light-curing 3D printer optical machine of any one of claims 1-8, the method comprising the following steps:
controlling the plurality of light-emitting sources to simultaneously emit scattered lights to be respectively collimated by corresponding condensing lens units;
regulating a voltage according to a shape of a to-be-product to control the transparency of each pixel of the LCD transmitting screen so as to obtain a transmitting pattern corresponding to the shape of the to-be-product;
wherein, the collimated light emerges out from the transmitting pattern.

## Amended claims

### Amended claims in accordance with Rule 137(2) EPC.

1. A light-curing 3D printer optical machine, the light-curing 3D printer optical machine comprising:
a plurality of light-emitting sources (30) which are uniformly arranged and simultaneously emit light;
a grid plate (40) which is located above the light-emitting sources (30), and has a plurality of vertical optical channels (41) each corresponding to a position right above one of the light-emitting sources (30) which are directly opposite to the center of the vertical optical channel (41) which is surrounded by vertical and opaque side walls (42) limiting the reflection of light;
a lens (50) which is located above the plurality of vertical optical channels (41), and has a plurality of condensing lens units (51) each formed corresponding to a position right above one of the vertical optical channels (41); and
a liquid crystal display (LCD) transmitting screen (60) which is located above the lens (50), and has pixel lattices, and the transparency of each of pixel points being controlled by regulating a voltage;
the light-curing 3D printer optical machine is characterized that, the light emitted by the light emitting sources (30) is scattered light with a luminous angle of approximately 180°, at least a part of the scattered light emitted from the light-emitting sources (30) enters into the optical channel (41), the part of the scattered light entering into the optical channel (41) emerges out and merges into the condensing lens units (51), the part of the scattered light after being collimated by the condensing lens units (51) is directed to the LCD transmitting screen (60), and the light from the plurality of light-emitting sources (30) are respectively collimated and completely cover the LCD transmitting screen (60).

2. The light-curing 3D printer optical machine according to claim 1, wherein the lower surface of the lens (50) is a plane, the upper surface of the lens (50) is a plurality of convex faces, each of the convex faces corresponds to one of the condensing lens units (51), the lens (50) is supported by the grid plate (40) and tightly clings to the upper surface of the grid plate (40).

3. The light-curing 3D printer optical machine according to claim 1, wherein the grid plate (40) is spaced from the light-emitting sources (30) at a certain distance.

4. The light-curing 3D printer optical machine according to claim 1, wherein the light-emitting sources (30) are arranged on a lamp plate (20), and a radiator plate (10) is arranged under the lamp plate (20).

5. The light-curing 3D printer optical machine according to claim 1, wherein the grid plate (40) and the radiator plate (10) are fixed, the LCD transmitting screen (60) is fixed through a frame (70), and the frame and the radiator plate (10) are fixed through a bracket (71).

6. The light-curing 3D printer optical machine according to claim 1, wherein the LCD transmitting screen (60) is a constant black hard screen.

7. The light-curing 3D printer optical machine according to claim 1, wherein the LCD transmitting screen (60) comprises scanning lines (61) and signal lines (62), the scanning lines (61) transversely extend and are longitudinally spaced, the signal lines (62) longitudinally extend and are transversely spaced, square regions (63) are defined between two adjacent scanning lines (61) and two adjacent signal lines (62), a transparent electrode (64) is arranged in the square region (63), the outline of the transparent electrode (64) is square and continuous, a region corresponding to the transparent electrode (64) is a minimum pixel point, and the transparent electrode (64) is electrically connected with one of the two scanning lines (61) and one of the two signal lines (62).

8. The light-curing 3D printer optical machine according to claim 7, wherein the LCD transmitting screen (60) is a black and white screen.

9. A light-curing 3D printer, wherein the light-curing 3D printer uses the optical machine of any one of claims 1-8.

10. A method for luminous display based on the light-curing 3D printer optical machine of any one of claims 1-8, the method comprising the following steps:
controlling the plurality of light-emitting sources (30) to simultaneously emit scattered light with a luminous angle of approximately 180° to be respectively collimated by corresponding condensing lens units (51);
regulating a voltage according to a shape of a to-be-product to control the transparency of each pixel of the LCD transmitting screen (60) so as to obtain a transmitting pattern corresponding to the shape of the to-be-product;
wherein, the collimated light emerges out from the transmitting pattern.
